# EUROPÄISCHE PATENTSCHRIFT

(11) **EP 2 999 883 B1**
(45) Veröffentlichungstag und Bekanntmachung des Hinweises auf die Patenterteilung: **06.12.2017**
(21) Anmeldenummer: 14724649.0
(22) Anmeldetag: 16.05.2014
(51) Int. Cl.: F04B 1/12, F04B 53/14

(54) **HYDROPUMPE UND KOLBEN FÜR EINE SOLCHE HYDROPUMPE**
HYDRAULIC PUMP AND PISTON FOR SUCH AN HYDRAULIC PUMP
POMPE HYDRAULIQUE ET PISTON POUR UNE TELLE POMPE HYDRAULIQUE

(30) Priorität: 22.05.2013 DE 102013008677; 22.05.2013 DE 102013008629; 22.05.2013 DE 102013008681; 22.05.2013 DE 102013008679; 22.05.2013 DE 102013008678; 22.05.2013 DE 102013008676
(43) Veröffentlichungstag der Anmeldung: 30.03.2016
(73) Patentinhaber: Hydac Drive Center GmbH, 89129 Langenau (DE)
(72) Erfinder: WYKYDAL, Bernd, 89537 Giengen (DE)
(74) Vertreter: Bartels, Martin Erich Arthur
(86) Internationale Anmeldenummer: PCT/EP2014/001328
(87) Internationale Veröffentlichungsnummer: WO 2014/187547

(56) Entgegenhaltungen:
- EP-A2- 0 608 144
- EP-A2- 1 264 985
- DE-A1- 2 653 868
- DE-A1- 4 214 765
- JP-A- H11 257 210
- US-A- 4 743 179
- US-A1- 2004 101 419
- US-A1- 2005 226 737

## Beschreibung

Die Erfindung betrifft eine Hydropumpe, insbesondere eine einstellbare Axialkolbenpumpe, sowie einen Kolben für eine solche Hydropumpe gemäß der Merkmalsausgestaltung des Oberbegriffes des Patentanspruches 1.

Im Betrieb einer solchen Hydropumpe wird mechanische Energie in hydrostatische Energie umgewandelt, wobei die mechanische Energie beispielsweise durch einen Elektromotor bereitgestellt wird. In der Bauform einer Axialkolbenpumpe weisen derartige Hydropumpen, wie sie beispielhaft in der US 2005/0226737 A1 aufgezeigt sind, in der Regel mehrere Zylinder auf, die an einer drehbaren Welle derart befestigt sind, dass sie sich in axialer Richtung erstrecken und auf einen Teilkreis versetzt in einem Radius zur Wellenachse angeordnet sind. In den Zylindern sind Kolben verschiebbar angeordnet. Die mit dem Zylinder rotierenden Kolben werden zum Beispiel durch eine verstellbare Schrägplatte bewegt. Hierzu ist zur Minimierung der Reibung eine Kolben-Gleitschuh-Verbindung zwischen der Schrägplatte und den Kolben vorgesehen.

Problematisch ist hierbei die Masse der in der Regel aus einem Stück gedrehten Kolben. Aufgrund der Masse erfordert es eine erhebliche Energie, um die Kolben zu beschleunigen und wieder abzubremsen, was mit einem erheblichen Verschleiß im Bereich der Kolben-Gleitschuh-Verbindung verbunden ist. Zur Reduzierung der Massenträgheitskräfte hat man deshalb in der Vergangenheit den Kolben vom Kolbenboden her mit einer Bohrung versehen, sodass der Kolben im Wesentlichen ausgehöhlt ist. So zeigt die DE 26 53 868 A1 einen solchen Hohlkolben für eine hydrostatische Kolbenmaschine, vorzugsweise in Form einer Axialkolbenmaschine in Schrägscheibenbauform, mit einer in der Kolbenlängsachse angeordneten Zentralsäule und mit einer Längs- oder Durchgangsbohrung in dieser für die Druckmittelversorgung für den Erhalt eines Druckpolsters und mit einer in der Nähe der Stirnseite angeordneten Stützscheibe zwischen der Zentralsäule und dem Kolbenmantelteil und mit einem den Hohlraum umschließenden und die Zentralsäule mit dem Kolbenmantelteil verbindenden Stirnflächendeckel, der sowohl mit dem Kolbenmantelteil als auch mit der zentralen Säule durch eine dicht ausgeführte Reibschweißverbindung verbunden ist. Eine solche Kolbenbohrung für den Erhalt des Hohlkolbens hat aber den Nachteil, dass das Totvolumen im Zylinder vergrößert wird. Durch das Totvolumen treten Kompressionsverluste und erhöhte Volumenstrom- bzw. Druckpulsationen auf, die sich in einem niedrigeren Pumpenwirkungsgrad niederschlagen.

Vor diesem Hintergrund ist es die Aufgabe der Erfindung, eine Hydropumpe und einen Kolben für eine solche Hydropumpe aufzuzeigen, bei der beziehungsweise durch welchen der Wirkungsgrad der Hydropumpe erhöht ist oder wird. Die Aufgabe wird durch eine Hydropumpe mit den Merkmalen von Anspruch 1 bzw. durch einen Kolben mit den Merkmalen von Anspruch 9 gelöst. Vorteilhafte Ausführungsformen und Weiterbildungen der Hydropumpe gehen aus den Unteransprüchen 2 bis 8 hervor.

Erfindungsgemäß ist nach dem kennzeichnenden Teil des Patentanspruches 1 bzw. des Anspruchs 9 vorgesehen, dass zum Vermeiden eines Überdruckes in der jeweiligen Hohlkammer beim Fügen des Kolbens die zumindest eine Hohlkammer mittels einer Ausgleichseinrichtung, die der Deckel und/oder der Kolben aufweist, medienführend mit der Umgebung verbunden ist. Durch die erfindungsgemäße Ausgleichseinrichtung kann somit das Entstehen von Überdruck in der Hohlkammer vermieden werden, welcher zu Prozessinstabilitäten beim Fügen führen kann. Der Kolben weist einen Anlenkkopf und einen dem Anlenkkopf gegenüberliegenden Kolbenboden sowie mindestens eine Hohlkammer auf. Die Hohlkammer ist zumindest teilweise von einem Kolbengehäuse umfasst. Das Kolbengehäuse schließt die jeweilige Hohlkammer nach außen hin im Wesentlichen oder vollständig ab.

Sofern vorliegend und im nachfolgenden davon gesprochen wird, dass die Hohlkammer nach außen hin im Wesentlichen abgeschlossen sein soll, bedeutet dies, dass ausgehend von der Umgebung kein relevanter Medienübertritt, insbesondere in Form von Fluid, durch etwa vorhandene Öffnungen im Kolbengehäuse und/oder in dessen Abschlussteil, beispielsweise in Form eines Deckels in das Innere der jeweiligen Hohlkammer erfolgt. Eine solch wirksame Sperre lässt sich nach wie vor bei wesentlichem Abschluss der Hohlkammer erreichen, selbst wenn beispielsweise Öffnungen wie Kapillaröffnungen im Kolbengehäuse angebracht sein sollten. Im Wesentlichen abgeschlossen bedeutet also, dass selbst im Fall des Anbringens von durchgehenden Öffnungen in die Hohlkammer hinein diese jedenfalls im Sinne einer Drossel oder Blende den Durchfluss entsprechend in dämpfender Weise behindern oder im Sinne einer Kapillaröffnung nicht zulassen.

Die erfindungsgemäße Hydropumpe zeichnet sich dadurch aus, dass der Vorteil einer geringeren Masse des Kolbens nicht durch ein größeres Totvolumen durch einen dem Pumpengehäuse gegenüber offenen Hohlraum erkauft wird. Mithin sind die Massenträgheitskräfte vorteilhaft reduziert bei minimiertem Totvolumen im Zylinder. Mithin ist der Wirkungsgrad der Hydropumpe verbessert, weil weniger Energie aufgewendet werden muss, um die gleiche Menge an Fluid zu fördern. Darüber hinaus zeichnet sich eine derartige Hydropumpe durch einen geringeren Verschleiß im Bereich der Kolben-Gleitschuh-Verbindung aus.

Besonders vorteilhaft verläuft die zumindest eine Hohlkammer in Richtung der Längsachse oder parallel zu der Längsachse des Kolbens im Kolbengehäuse und durchgreift den Kolben ausgehend von einem axialen Abstand von dem Anlenkkopf bis zum Kolbenboden. Eine solche Bohrung kann besonders einfach vom Kolbenboden aus in den Kolben eingebracht werden. Eine exzentrische Anordnung der zumindest einen Hohlkammer hat den Vorteil, dass neben der Hohlkammer eine konzentrische Durchgangsbohrung im Kolben vorgesehen werden kann, um den Anlenkkopf während des Betriebes der Hydropumpe entlasten und schmieren zu können. Die zumindest eine Hohlkammer ist durch einen mit dem Kolbengehäuse verbindbaren Deckel geschlossen, so dass sich die Möglichkeit ergibt, die Hohlkammer in Form einer Bohrung im Kolben vorzusehen und die Hohlkammer anschließend mit dem Deckel zu verschließen. Der Deckel kann ebenfalls als Drehteil hergestellt und annähernd spaltfrei in das Kolbengehäuse eingesetzt werden. Dadurch werden Risse beim anschließenden Schweißen vermieden und es ist möglich, die Hohlkammer vollständig abzudichten.

Die Ausgleichseinrichtung kann eine Spiralnut entlang einer Außenumfangsfläche des Deckels umfassen, die bei in das Gehäuse eingesetztem Deckel von dem Kolbengehäuse bis auf eine Auslassstelle überdeckt ist, wobei die Auslassstelle als Teil der Ausgleichseinrichtung die medienführende Verbindung zwischen der Umgebung und der zumindest einen Hohlkammer im Kolben über die Spiralnut herstellt. Durch die Spiralnut ist es möglich, einen Überdruck während des gesamten Prozesses des Einsetzens des Deckels in das Kolbengehäuse abzubauen.

Besonders vorteilhaft mündet die Spiralnut auf ihrer anderen, der Auslassstelle gegenüberliegenden Einlassstelle in eine Fase des Deckels oder grenzt an diese an, wobei sich der Außendurchmesser der Fase vorzugsweise stetig in Richtung des Anlenkkopfes bis zu einem Abschlussdurchmesser verringert. Durch diese Fase kann bei mehreren Hohlkammern deren gleichmäßige Entlüftung während des Fügens des Deckels gewährleistet werden.

Das Kolbengehäuse kann vorteilhaft am Kolbenboden ein Koppelteil aufweisen, über das der Deckel mit dem Kolbenboden koppelbar, vorzugsweise verschweißbar oder lötbar, ist. Durch das Koppelteil wird eine Führungs- und/oder Befestigungsmöglichkeit für den Deckel am Kolbengehäuse geschaffen. Auf diese Weise ist die Ausrichtung des Deckels gewährleistet. Dies ist insbesondere bei einer anschließenden Verschweißung des Deckels mit dem Kolbengehäuse von Vorteil.

Der Deckel kann mit dem Kolbengehäuse durch Löten oder ein Elektronenstrahl-Schweißverfahren fest verbunden sein und der Kolben kann nach dem Verschweißen vorzugsweise wärmebehandelt sein. Vor dem Hartlöten werden das Kolbengehäuse und der Deckel vorgedreht, damit der Lötspalt zwischen dem Deckel und dem Kolbengehäuse, insbesondere den Wandteilen des Kolbengehäuses, 80 *µ*m bis 120 *µ*m beträgt, um eine optimale Kapillarwirkung zu erzielen, damit sich der Lötspalt zwischen Kolben und Deckel mit Lot füllt. Der Deckel sollte zusätzlich mit einer ausreichend großen Fase auf der den Bohrungen zugewandten Seite versehen werden, um eine Oxidation während des Lötens im Vakuum zu verhindern. Nach dem Drehen wird der Deckel in das Kolbengehäuse eingesetzt und beide werden im Vakuum mit Hilfe eines metallischen Zusatzwerkstoffes, eines Lots, bei 450 °C bis 1200 °C stoffschlüssig und unlösbar miteinander verbunden. Dieser Vorgang wird auch als Verbindungslöten bezeichnet. Auf diese Weise wird der durch die Bohrungen gebildete Hohlraum verschlossen. Mithin ist es auch im laufenden Betrieb nicht möglich, dass das Totvolumen des Kolbens durch eine undichte Stelle der Kolbengehäuse-Deckel-Verbindung vergrößert wird.

Die Elektronenstrahl-Schweißnaht verschließt vorteilhaft zumindest die Auslassstelle der Spiralnut. Auf diese Weise ist der Eintritt von Fluid in die zumindest eine Hohlkammer des Kolbens erheblich erschwert.

Vorzugsweise sind im Kolben mehrere Hohlkammern, bevorzugt gleichen Durchmessers, auf einem Teilkreis versetzt zueinander vorgesehen. Dies ermöglicht es, das Volumen der Hohlkammern zu maximieren und zugleich eine zentrale, in Richtung der Längsachse verlaufende Bohrung im Kolben vorzusehen, welche der Schmierung des Anlenkkopfes im laufenden Betrieb dienen kann.

Die Erfindung ist nachfolgend anhand von in den Figuren dargestellten Ausführungsbeispielen näher erläutert. Es zeigen:
- Fig. 1: einen Querschnitt durch eine Axialkolbenpumpe im Ausschnitt;
- Fig. 2: einen Querschnitt des Kolbens;
- Fig. 3: eine perspektivische Ansicht des Kolbens mit einem Deckel;
- Fig. 4: ein Detail der Fig. 2, wobei das Herstellen der Elektronenstrahl-Schweißnaht gezeigt ist;
- Fig. 5: eine perspektivische Ansicht eines erfindungsgemäßen Kolbens mit dem darin festgelegten Deckel; und
- Fig. 6 bis 8: eine Draufsicht, eine Seitenansicht und eine perspektivische Ansicht des Deckels.

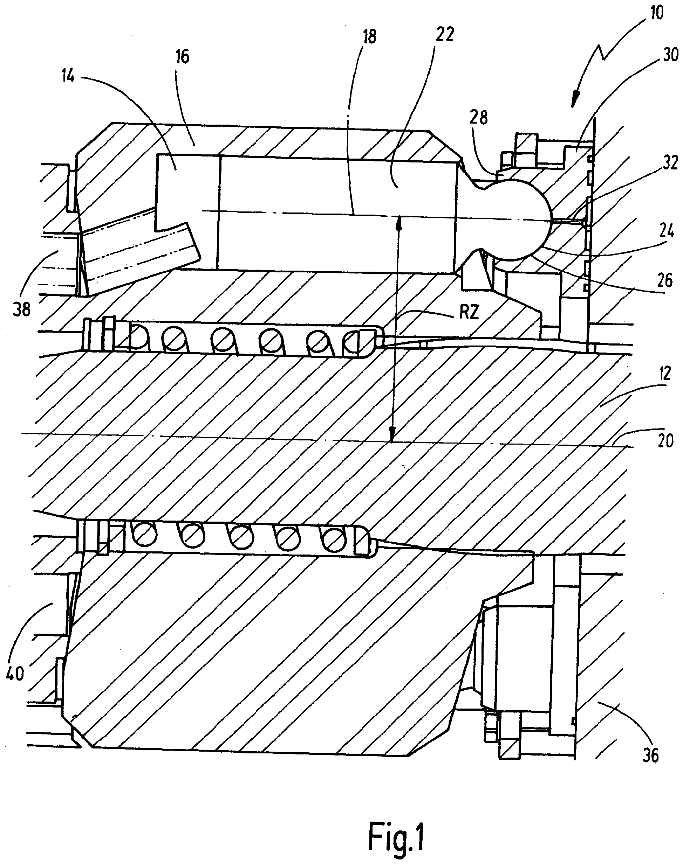

Eine Hydropumpe 10 in Form einer Axialkolbenpumpe ist in einem Ausschnitt in der Fig. 1 im Querschnitt dargestellt. Auf einer drehbaren Welle 12 sind ortsfest Zylinder 14 als Teil des Pumpengehäuses 16 angeordnet, so dass die Zylinder 14 mit der Welle 12 rotieren. Es ist eine ungerade Anzahl von Zylindern 14 vorgesehen, die auf einem Teilkreis versetzt angeordnet sind. Die Längsachsen 18 der Zylinder 14 weisen alle den gleichen Radius RZ zur Längsachse 20 der Welle 12 auf. In den Zylindern 14 ist jeweils ein Kolben 22 in Längsrichtung verschiebbar angeordnet. An einem Anlenkkopf 24 des Kolbens 22 ist eine sphärische Oberfläche 26 vorgesehen, die in einem korrespondierenden Aufnahmeteil 28 eines Gleitschuhs 30 gehalten ist. Der Gleitschuh 30 ist mit einer Längsbohrung 32 zur Schmierung des Aufnahmeteils 28 versehen. Der Gleitschuh 30 ist unter Zwischenschaltung einer Schrägscheibe 36 gleitend an einem Verstellmechanismus gelagert. Über einen Fluideinlass 38 kann eine Flüssigkeit, insbesondere eine Hydraulikflüssigkeit, in einem ersten Arbeitstakt in den Zylinder 14 hineingesogen werden. Über einen Fluidauslass 40 kann die Flüssigkeit anschließend in einem zweiten Arbeitstakt wieder aus dem Zylinder 14 herausgedrückt werden. In einer halben Umdrehung der Welle 12 wird ein Zylinder 14 somit vollgesogen, während er in der anderen halben Umdrehung der Welle 12 wieder leergedrückt wird. Auf diese Weise kann eine hohe und gleichmäßige Pumpenleistung erbracht werden.

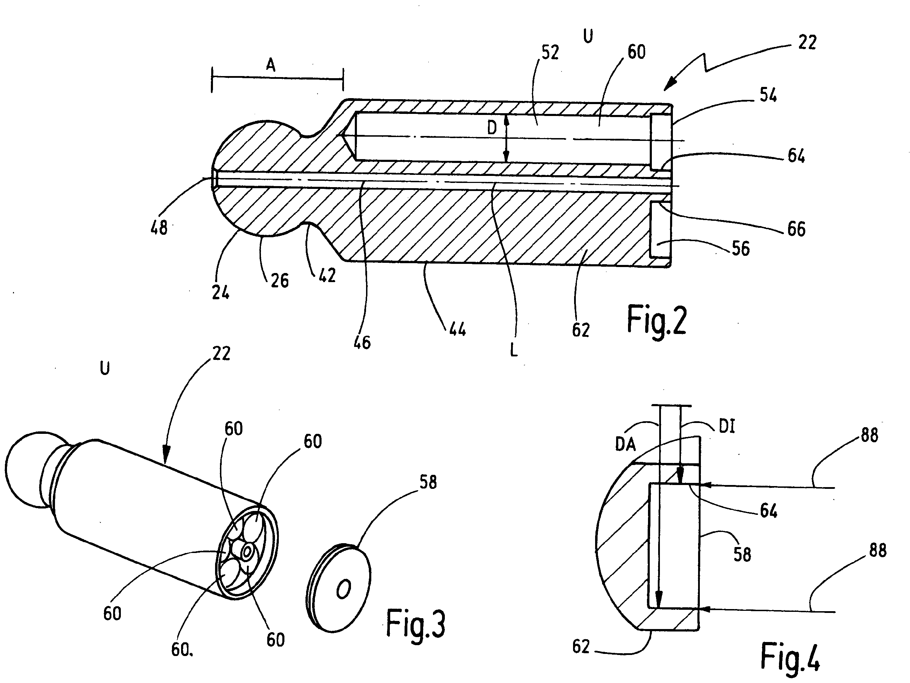

Der erfindungsgemäße Kolben 22 ist in den Fig. 2 bis 5 im Einzelnen gezeigt. Der Kolben 22 weist den Anlenkkopf 24 auf, der über einen Hals 42 in einen Kolbenkörper 44 übergeht. Der Anlenkkopf 24 weist die sphärische Oberfläche 26 auf. Durch den Kolben 22 erstreckt sich eine Durchgangsbohrung 46, die an einem Ende 48 angefast ist. Parallel zur Durchgangsbohrung 46 und damit zur Längsachse L des Kolbens 22 sind insgesamt fünf axiale Bohrungen 52 gleichen Durchmessers D vorgesehen. Diese erstrecken sich vom Kolbenboden 54 in Richtung des Anlenkkopfes 24 und enden in einem axialen Abstand A vom Anlenkkopf 24. Am Kolbenboden 54 ist eine Ringausnehmung 56 für einen Deckel 58 vorgesehen. Die Bohrungen 52 des Kolbens 22 bilden Hohlkammern 60 aus, die auf einem Teilkreis versetzt angeordnet sind. Mithin sind die Hohlkammern 60 in einem Kolbengehäuse 62 vorgesehen. Durch die Ringausnehmung 56 bleibt ein vorstehender Wandteil 64 der Durchgangsbohrung 46 bestehen. Dieser Wandteil 64 bildet ein Koppelteil 66 für den damit zu koppelnden Deckel 58 und zentriert diesen beim Einsetzen.

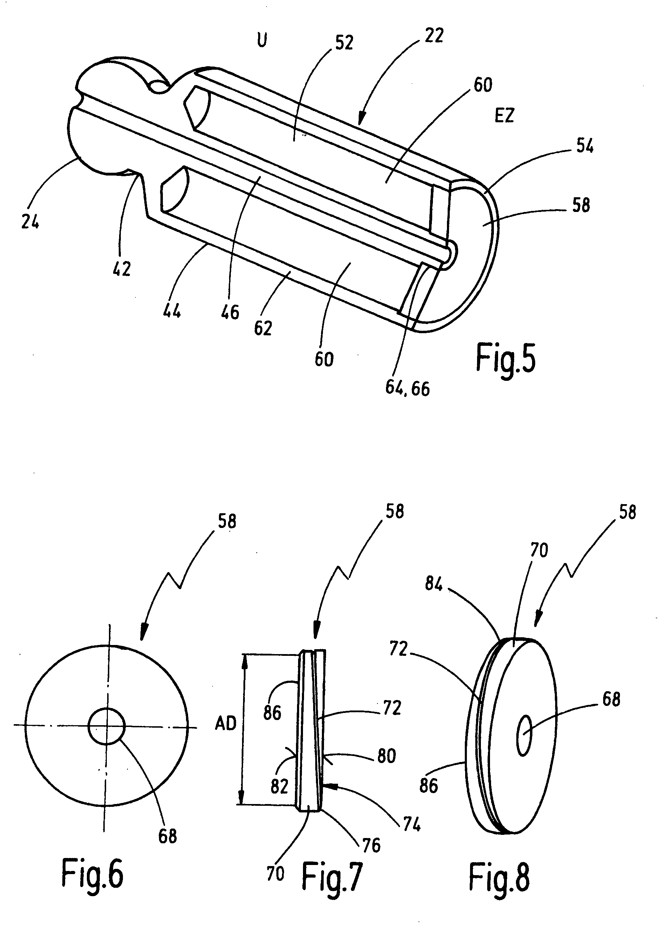

Wie die Fig. 6 bis 8 genauer zeigen, ist der Deckel 58 ein scheibenförmiges Drehteil mit einer zentralen, dem Außendurchmesser des vorstehenden Wandteils 64 entsprechenden Bohrung 68. Auf der Außenumfangsfläche 70 des Deckels 58 ist eine umlaufende Spiralnut 72 als Teil einer Ausgleichseinrichtung 74 vorgesehen, welche die Hohlkammern 60 medienführend mit der Umgebung U verbindet. Bei in das Kolbengehäuse 62 eingesetztem Deckel 58 ist die Spiralnut 72 von dem Kolbengehäuse 62 bis auf eine Auslassstelle 76 überdeckt. Die Auslassstelle 76 stellt als Teil der Ausgleichseinrichtung 74 die medienführende Verbindung zwischen der Umgebung U und den Hohlkammern 60 im Kolben 22 über die Spiralnut 72 her. Die Auslassstelle 76 ist auf einer Rückseite 80 des Deckels 58 angeordnet. Auf der gegenüberliegenden Vorderseite 82 mündet die Spiralnut 72 an einer Einlassstelle 84 in eine Fase 86. Die Fase 86 verringert sich im Außendurchmesser in Richtung des Anlenkkopfes 24 bis zu einem Abschlussdurchmesser AD, wenn der Deckel 58 im eingesetzten Zustand EZ ist.

Wie Fig. 4 näher zeigt, wird nach dem Einsetzen des Deckels 58 in das Kolbengehäuse 62 der Deckel 58 mit dem Kolbengehäuse 62 entlang des gesamten Umfangs seines Innendurchmessers DI und seines Außendurchmessers DA mit einem Elektronenstrahl-Schweißverfahren verschweißt. Damit ist auch die Auslassstelle 76 verschlossen. Der Elektronenstrahl 88 ist dabei parallel zur Längsachse L des Kolbens 22 gerichtet, um eine möglichst effiziente Verschweißung zu ermöglichen. Hierzu sollte der Deckel 58 zuvor spaltfrei in das Kolbengehäuse 62 eingesetzt und ausgerichtet werden, um Risse beim Schweißen zu vermeiden. Die ElektronenstrahlSchweißung wird nach DIN 4063 im Vakuum vorgenommen. Dabei handelt es sich um eine I-Axialnaht, bei welcher der Elektronenstrahl 88 parallel zur Längsachse L steht. Durch die Verschweißung sind die Hohlkammern 60 nach außen zur Umgebung U hin vollständig abgeschlossen. Nach dem Verschweißen wird der Kolben 22 endbearbeitet und wärmebehandelt.

Der fertige Kolben 22 ist in einer perspektivischen Schnittdarstellung in Fig. 5 dargestellt. Er zeichnet sich mithin durch eine verringerte Masse aufgrund der Hohlkammern 60 aus, wobei der Deckel 58 verhindert, dass das Totvolumen im Zylinder 14 vergrößert wird. Auf diese Weise können durch die Hohlkammern 60 keine zusätzlichen Kompressionsverluste auftreten, wodurch der Wirkungsgrad der Hydropumpe 10 vorteilhaft erhöht wird.

## Patentansprüche

1. Hydropumpe, insbesondere einstellbare Axialkolbenpumpe, mit mindestens einem beim Betrieb der Hydropumpe innerhalb eines Pumpengehäuses (16) in einer Längsrichtung (18) hin und her bewegbaren Kolben (22), der einen Anlenkkopf (24) und einen dem Anlenkkopf (24) gegenüberliegenden Kolbenboden (54) aufweist und durch den sich eine Durchgangsbohrung (46) erstreckt und der mindestens eine Hohlkammer (60) aufweist, die zumindest teilweise von einem Kolbengehäuse (62) umfasst ist, das die jeweilige Hohlkammer (60) nach außen hin im Wesentlichen oder vollständig abschließt, wobei die zumindest eine Hohlkammer (60) neben dem Kolbengehäuse (62) durch einen Deckel (58) geschlossen ist, der mit dem Kolbengehäuse (62) verbindbar ist, **dadurch gekennzeichnet, dass** zum Vermeiden eines Überdruckes in der zumindest einen Hohlkammer (60) beim Fügen des Kolbens (22) die zumindest eine Hohlkammer (60) mittels einer Ausgleichseinrichtung (74), die der Deckel (58) und/oder der Kolben (22) aufweist, medienführend mit der Umgebung (U) verbunden ist.

2. Hydropumpe nach Anspruch 1, **dadurch gekennzeichnet, dass** die zumindest eine Hohlkammer (60) in Richtung der oder parallel zu der Längsachse (L) des Kolbens (22) im Kolbengehäuse (62) verläuft und den Kolben (22) ausgehend von einem axialen Abstand (A) vom Anlenkkopf (24) bis zum Kolbenboden (54) durchgreift.

3. Hydropumpe nach Anspruch 1 oder 2, **dadurch gekennzeichnet, dass** die Ausgleichseinrichtung (74) eine Spiralnut (72) entlang der Außenumfangsfläche (70) des Deckels (58) umfasst, die bei in das Kolbengehäuse (62) eingesetztem Deckel (58) von dem Kolbengehäuse (62) bis auf eine Auslassstelle (76) überdeckt ist, die als Teil der Ausgleichseinrichtung (74) die medienführende Verbindung zwischen der Umgebung (U) und der zumindest einen Hohlkammer (60) im Kolben (22) über die Spiralnut (72) herstellt.

4. Hydropumpe nach Anspruch 3, **dadurch gekennzeichnet, dass** die Spiralnut (72) auf ihrer anderen, der Auslassstelle (76) gegenüberliegenden Einlassstelle (84) in eine Fase (86) des Deckels (58) mündet oder an diese grenzt, wobei sich der Außendurchmesser der Fase (86) vorzugsweise stetig in Richtung des Anlenkkopfes (24) bis zu einem Abschlussdurchmesser (AD) verringert.

5. Hydropumpe nach einem der Ansprüche 1 bis 4, **dadurch gekennzeichnet, dass** das Kolbengehäuse (62)-am Kolbenboden (54) ein Koppelteil (66) aufweist, über das der Deckel (58) mit dem Kolbenboden (54) koppelbar, vorzugsweise verschweißbar oder lötbar, ist.

6. Hydropumpe nach einem der Ansprüche 1 bis 5, **dadurch gekennzeichnet, dass** der Deckel (58) mit dem Kolbengehäuse (62) durch Löten oder ein Elektronenstrahl-Schweißverfahren fest verbunden ist und dass der Kolben (22) nach dem Verschweißen vorzugsweise wärmebehandelt ist.

7. Hydropumpe nach Anspruch 6, **dadurch gekennzeichnet, dass** die Elektronenstrahl-Schweißnaht zumindest die Auslassstelle (76) der Spiralnut (72) verschließt.

8. Hydropumpe nach einem der vorhergehenden Ansprüche, **dadurch gekennzeichnet, dass** im Kolbengehäuse (62) mehrere Hohlkammern (60), vorzugsweise gleichen Durchmessers (D), auf einem Teilkreis versetzt zueinander vorgesehen sind.

9. Kolben für eine Hydropumpe nach einem der vorhergehenden Ansprüche, der einen Anlenkkopf (24) und einen dem Anlenkkopf (24) gegenüberliegenden Kolbenboden (54) aufweist und durch den sich eine Durchgangsbohrung (46) erstreckt und der mindestens eine Hohlkammer (60) aufweist, die zumindest teilweise von einem Kolbengehäuse (62) umfasst ist, das die jeweilige Hohlkammer (60) nach außen hin im Wesentlichen oder vollständig abschließt, wobei die zumindest eine Hohlkammer (60) neben dem Kolbengehäuse (62) durch einen Deckel (58) geschlossen ist, der mit dem Kolbengehäuse (62) verbindbar ist, **dadurch gekennzeichnet, dass** zum Vermeiden eines Überdrucks in der zumindest einen Hohlkammer (60) beim Fügen des Kolbens (22) die zumindest eine Hohlkammer (60) mittels einer Ausgleichseinrichtung (74), die der Deckel (58) und/oder der Kolben (22) aufweist, medienführend mit der Umgebung (U) verbunden ist.

10. Kolben nach Anspruch 9, **dadurch gekennzeichnet, dass** die zumindest eine Hohlkammer (60) in Richtung der oder parallel zu der Längsachse (L) des Kolbens (22) im Kolbengehäuse (62) verläuft und den Kolben (22) ausgehend von einem axialen Abstand (A) vom Anlenkkopf (24) bis zum Kolbenboden (54) durchgreift.

11. Kolben nach Anspruch 9 oder 10, **dadurch gekennzeichnet, dass** die zumindest eine Hohlkammer (60) durch das Kolbengehäuse (62) oder durch einen Deckel (58) geschlossen ist, der mit dem Kolbengehäuse (62) verbindbar ist.

## Claims

1. A hydraulic pump, in particular an adjustable axial piston pump, comprising at least one piston (22) that can be moved to and fro in a longitudinal direction (18) within a pump housing (16) during operation of the hydraulic pump, which piston has a linking head (24) and a piston bottom (54) lying opposite the linking head (24) and through which a through hole (46) extends, and which has at least one hollow chamber (60) which is encompassed at least partially by a piston housing (62) which substantially or totally shuts off the respective hollow chamber (60) from the outside, the at least one hollow chamber (60) being closed not only by the piston housing (62), but also by a cover (58) which can be connected to the piston housing (62), **characterised in that** that in order to avoid overpressure in the at least one hollow chamber (60) upon connecting the piston (22), the at least one hollow chamber (60) is connected to the surroundings (U) such as to convey media by means of a compensation device (74) contained in the cover (58) and/or the piston (22).

2. The hydraulic pump according to Claim 1, **characterised in that** the at least one hollow chamber (60) runs in the direction of or parallel to the longitudinal axis (L) of the piston (22) in the piston housing (62) and passes through the piston (22) from a point an axial distance (A) away from the linking head (24) to the bottom (54) of the piston.

3. The hydraulic pump according to Claim 1 or 2, **characterised in that** the compensation device (74) comprises a spiral groove (72) along the outer peripheral surface (70) of the cover (58) which, with the cover (58) inserted into the piston housing (62), is covered by the piston housing (62) apart from at an outlet point (76), the outlet point, as part of the compensation device (74), establishing the media-conveying connection between the surroundings (U) and the at least one hollow chamber (60) in the piston (22) via the spiral groove (72).

4. The hydraulic pump according to Claim 3, **characterised in that** the spiral groove (72) discharges on its other inlet point (84) lying opposite the outlet point (76) into a chamfer (86) of the cover (58) or borders on the latter, the external diameter of the chamfer (86) preferably being constantly reduced in the direction of the linking head (24) up to a shutoff diameter (AD).

5. The hydraulic pump according to any of Claims 1 to 4, **characterised in that** the piston housing (62) has a coupling part (66) on the bottom of the piston (54), by means of which the cover (58) can be coupled, preferably by welding or by soldering, to the bottom (54) of the piston.

6. The hydraulic pump according to any of Claims 1 to 5, **characterised in that** the cover (58) is securely connected to the piston housing (62) by soldering or by an electron beam welding process, and that the piston (22) is preferably heat-treated after the welding.

7. The hydraulic pump according to Claim 6, **characterised in that** the electron beam weld seam closes at least the outlet point (76) of the spiral groove (72).

8. The hydraulic pump according to any of the preceding claims, **characterised in that** a number of hollow chambers (60), preferably all with the same diameter (D), are provided offset from one another on a part circle in the piston housing (62).

9. A piston for a hydraulic pump according to any of the preceding claims, which has a linking head (24) and a piston bottom (54) lying opposite the linking head (24), and through which a through hole (46) extends and which has at least one hollow chamber (60) which is encompassed at least partially by a piston housing (62) which substantially or totally shuts off the respective hollow chamber (60) from the outside, the at least one hollow chamber (60) being closed not only by the piston housing (62), but also by a cover (58) which can be connected to the piston housing, **characterised in that** in order to avoid overpressure in the at least one hollow chamber (60) upon connecting the piston (22), the at least one hollow chamber (60) is connected to the surroundings (U) such as to convey media by means of a compensation device (74) contained in the cover (58) and/or the piston (22).

10. The piston according to Claim 9, **characterised in that** the at least one hollow chamber (60) runs in the direction of or parallel to the longitudinal axis (L) of the piston (22) in the piston housing (62) and passes through the piston (22) from a point an axial distance (A) away from the linking head (24) to the bottom (54) of the piston.

11. The piston according to Claim 9 or 10, **characterised in that** the at least one hollow chamber (60) is closed by the piston housing (62) or by a cover (58) that can be connected to the piston housing (62).

## Revendications

1. Pompe hydraulique, notamment pompe à piston axial réglable, comprenant au moins un piston (22) pouvant aller et venir dans une direction (18) longitudinale dans un corps (16) de pompe, lors du fonctionnement de la pompe hydraulique, piston (22) qui a une tête (24) d'articulation et un fond (54) de piston opposé à la tête (24) d'articulation et dans lequel s'étend un alésage (46) de passage et qui a au moins une chambre (60) creuse, entourée au moins en partie d'une enveloppe (62) de piston, qui ferme sensiblement ou complètement la chambre (60) creuse vers l'extérieur, la au moins une chambre (60) creuse étant fermée, à côté de l'enveloppe (62) du piston, par un couvercle (58) pouvant être relié à l'enveloppe (62) du piston, **caractérisée en ce que**, pour empêcher une surpression dans la au moins une chambre (60) creuse, lors de l'assemblage du piston (22), la au moins une chambre (60) creuse est reliée à l'atmosphère (U) ambiante d'une manière à conduire des milieux au moyen d'un dispositif (74) de compensation, qui comporte le couvercle (58) et/ou le piston (22).

2. Pompe hydraulique suivant la revendication 1, **caractérisée en ce que** la au moins une chambre (60) creuse s'étend dans l'enveloppe (62) du piston, dans la direction de l'axe (L) longitudinal du piston (22) ou parallèlement à celle-ci, et traverse le piston (22) à partir d'une distance (A) axiale de la tête (24) d'articulation au fond (54) du piston.

3. Pompe hydraulique suivant la revendication 1 ou 2, **caractérisée en ce que** le dispositif (74) de compensation comprend une rainure (72) en spirale, le long de la surface (70) périphérique extérieure du couvercle (58), rainure qui, lorsque le couvercle (58) est mis dans l'enveloppe (62) du piston, est recouverte par l'enveloppe (62) du piston à l'exception d'un point (76) de sortie, qui, en tant que partie du dispositif (74) de compensation, ménage la liaison de manière à conduire des milieux entre l'atmosphère (U) ambiante et la au moins une chambre (60) creuse dans le piston (22) par la rainure (72) en spirale.

4. Pompe hydraulique suivant la revendication 1 ou 3, **caractérisée en ce que** la rainure (72) en spirale débouche sur son autre point (84) d'entrée opposé au point (76) de sortie, dans un biseau (86) du couvercle (58) ou en est voisine, le diamètre extérieur du biseau (86) diminuant de préférence constamment dans la direction de la tête (24) d'articulation jusqu'à un diamètre (AD) de fermeture.

5. Pompe hydraulique suivant l'une des revendications 1 à 4, **caractérisée en ce que** l'enveloppe (62) du piston a, au fond (54) du piston, une partie (66) de liaison par laquelle le couvercle (58) peut être relié au fond (54) du piston, en y étant de préférence soudé ou brasé.

6. Pompe hydraulique suivant l'une des revendications 1 à 5, **caractérisée en ce que** le couvercle (58) est relié fixement à l'enveloppe (62) du piston par brasage ou par un procédé de soudage par faisceau d'électrons et **en ce que** le piston (22) est traité, de préférence thermiquement, après le soudage.

7. Pompe hydraulique suivant la revendication 6, **caractérisée en ce que** le cordon de soudure par faisceau d'électrons ferme au moins le point (76) de sortie de la rainure (72) en spirale.

8. Pompe hydraulique suivant l'une des revendications précédentes, **caractérisée en ce qu'**il est prévu, dans l'enveloppe (62) du piston, plusieurs chambres (60) creuses, de préférence de même diamètre (D), décalées les unes par rapport aux autres sur un cercle partiel.

9. Piston pour une pompe hydraulique suivant l'une des revendications précédentes, qui a une tête (24) d'articulation et un fond (54) de piston opposé à la tête (24) d'articulation et dans lequel s'étend un alésage (46) de passage et qui a au moins une chambre (60) creuse, qui est entourée, au moins en partie, d'une enveloppe (62) de piston, qui ferme sensiblement ou complètement la chambre (60) creuse vers l'extérieur, la au moins une chambre (60) creuse étant fermée, à côté de l'enveloppe (62) du piston, par un couvercle (58), qui peut être relié à l'enveloppe (62) du piston, **caractérisé en ce que** pour empêcher une surpression dans la au moins une chambre (60) creuse, lors de l'assemblage du piston (22), la au moins une chambre (60) creuse est reliée à l'atmosphère (U) ambiante d'une manière à conduire des milieux au moyen d'un dispositif (74) de compensation, qui comporte le couvercle (58) et/ou le piston (22).

10. Piston suivant la revendication 9, **caractérisé en ce que** la au moins une chambre (60) creuse s'étend dans l'enveloppe (62) du piston, dans la direction de l'axe (L) longitudinal du piston (22) ou parallèlement à celle-ci, et traverse le piston (22) à partir d'une distance (A) axiale de la tête (24) d'articulation au fond (54) du piston.

11. Piston suivant la revendication 9 ou 10, **caractérisé en ce que** la au moins une chambre (60) creuse est fermée par l'enveloppe (62) du piston ou par un couvercle (58), qui peut être relié à l'enveloppe (62) du piston.
